(19) Europäisches Patentamt
European Patent Office
Office européen des brevets

(11) **EP 2 530 443 A2**

(12) **EUROPÄISCHE PATENTANMELDUNG**

(43) Veröffentlichungstag:
**05.12.2012 Patentblatt 2012/49**

(51) Int Cl.:
***G01K 17/20*** *(2006.01)*

(21) Anmeldenummer: **12166360.3**

(22) Anmeldetag: **02.05.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **30.05.2011 DE 102011076680**

(71) Anmelder: **HILTI Aktiengesellschaft**
**9494 Schaan (LI)**

(72) Erfinder: **Gogolla, Torsten**
**9494 Schaan (LI)**

(54) **Bildgebendes Messsystem und Messverfahren zur Messung einer Wärmeabgabe an einem Zielobjekt**

(57) Bildgebendes thermographisches Messsystem (1000) zur Messung einer Wärmeabgabe ($Q_{out}$) an einem Zielobjekt (100), wie an einer Gebäudewand, einer Bauwerksfassade oder dergleichen, aufweisend eine zur objektfernen Anordnung vorgesehene Messstation (10) mit einer elektrischen bildgebenden Einrichtung (4) zur Aufnahme eines thermographischen Wärmebildes (200), dem eine Temperaturverteilung zuzuordnen ist, und mit einem objektfernen Temperatursensor (6) zur Messung einer objektfernen Temperatur ($T_{ref}$); wenigstens einen zur objektnahen Anordnung vorgesehenen Wärmeübergangssensor (30), eine Übertragungsanordnung (23) zur Übertragung von Werten, zwischen dem wenigstens einen Wärmeübergangssensor (30) und der Messstation (10), wobei der Wärmeübergangssensor (30) ausgebildet ist, Testwerte zur Ermittlung eines Wärmeübergangskoeffizienten (h) vorzugeben.

FIG. 2

EP 2 530 443 A2

**Beschreibung**

Technisches Gebiet

Die Erfindung betrifft ein bildgebendes Messsystem zur Messung einer Wärmeabgabe an einem Zielobjekt wie an einer Gebäudewand, einer Bauwerkfassade oder dergleichen. Weiter betrifft die Erfindung ein Messverfahren zur Messung einer Wärmeabgabe an dem Zielobjekt.

Stand der Technik

Ein bildgebendes Messsystem der eingangsgenannten Art kann eine Wärmebildkamera, auch Thermographiekamera genannt, nutzen, die - vergleichbar mit einer herkömmlich fotoelektrischen bildgebenden Kamera - anstelle von sichtbarem Licht Infrarotstrahlung bildgebend empfangen kann. Verwendbare Strahlung liegt aufgrund der typischen Emissionswellenlängen von Objekten in der Nähe der Umgebungstemperatur im mittleren Infrarotwellenlängenbereich zwischen 2,5 bis 14,0 $\mu$m, der für die Messung und bildliche Darstellung von Temperaturen im Umgebungstemperaturbereich geeignet ist. Ein bildgebendes Messsystem mit einer Wärmebild- bzw. Thermographiekamera kann somit für das menschliche Auge grundsätzlich unsichtbare Wärmestrahlung eines Zielobjekts visualisieren. Das Zielobjekt kann ein beliebiger Körper, vorliegend insbesondere zum Beispiel ein Gebäude oder dergleichen, sein. Berührungslos auszumessen sind vorliegend regelmäßig Flächen solcher Zielobjekte wie zum Beispiel eine Gebäudewand, eine Bauwerkfassade oder dergleichen. Insbesondere kann eine Temperaturverteilung auf einer Oberfläche eines Zielobjekts berührungslos erfasst und dargestellt werden, wobei grundsätzlich auch relativ weit entfernte größere Objekte abgebildet werden können. Insbesondere die Bestimmung von Energieverlusten ist eine der vielfältigen Anwendungen der Thermographie. Bisher bekannte bildgebende thermographische Messsysteme sind zur Bestimmung einer grundsätzlichen Temperaturverteilung zwar hilfreich, liefern aber regelmäßig nur einen qualitativen Wert eines Energieverlustes bzw. einer Wärmeabgabe, d.h. insbesondere nur eine qualitative Verteilung derselben an einem Zielobjekt. Soweit nicht besondere Umgebungsvoraussetzungen wie entsprechende Witterungsbedingungen und gegebenenfalls relativ lang anhaltend konstante Bedingungen ohne Störeinflüsse oder dergleichen am Messort vorliegen, kann - wie in dem Artikel von Dittié "Umwelteinflüsse auf die Genauigkeit von GebäudeThermographien" im Thermographie-Kolloquium 2007 - Vortrag 01 dargestellt - nur eine bedingte quantitative und fehlerbehaftete Aussage über eine Wärmeabgabe bzw. eine Verteilung einer Wärmeabgabe an einem Zielobjekt gemacht werden.

Wünschenswert ist es, eine grundsätzlich verlässlichere, insbesondere auch quantitative Aussage über eine Wärmeabgabe - insbesondere einer Verteilung der Wärmeabgabe - an einem Zielobjekt machen zu können.

**Darstellung der Erfindung**

An dieser Stelle setzt die Erfindung an, deren Aufgabe es ist, eine Vorrichtung und ein Verfahren anzugeben, mit dem eine verlässlichere, insbesondere auch eine quantitative, Messung einer Wärmeabgabe an einem Zielobjekt - insbesondere eine quantitative Messung einer Verteilung einer Wärmeabgabe an einem Zielobjekt- in verbesserter Weise möglich ist. Insbesondere soll eine Messung vergleichsweise unabhängig von Umgebungsbedingungen sein. Insbesondere soll es möglich sein, für eine einzige Aufnahme eines thermographischen Wärmebildes die wesentlichen Informationen zur Verfügung zu stellen, um eine jedenfalls verlässliche, näherungsweise quantitative Aussage über eine Wärmeabgabe, insbesondere eine Verteilung einer Wärmeabgabe, an einem Zielobjekt machen zu können.

Betreffend die Vorrichtung wird die Aufgabe durch die Erfindung mittels eines bildgebenden thermographischen Messsystems zur Messung einer Wärmeabgabe an einem Zielobjekt gemäß der eingangsgenannten Art gelöst, bei dem erfindungsgemäß die Merkmale des Anspruchs 1 vorgesehen sind. Betreffend das Verfahren wird die Aufgabe durch die Erfindung mittels eines Verfahrens der eingangs genannten Art gelöst, bei dem erfindungsgemäß die Merkmale des Anspruchs 15 vorgesehen sind.

Die Erfindung geht von der Überlegung aus, dass es unter Nutzung eines thermographischen Wärmebildes sowie weiterer Messwerte grundsätzlich möglich ist, jedenfalls nährungsweise, eine quantitative Aussage über eine Wärmeabgabe, insbesondere eine Verteilung einer Wärmeabgabe, an einem Zielobjekt, unabhängig von den Umgebungsbedingungen machen zu können. Die Erfindung geht weiter von der Überlegung aus, dass insbesondere schwer einzuschätzende konvektive Störeinflüsse eine quantitative Bestimmung einer Wärmeabgabe unabhängig von den Umgebungsbedingungen bisher erschwert haben. Die Erfindung hat erkannt, dass insbesondere konvektive Einflüsse mittels eines Wärmeübergangskoeffizienten berücksichtigt werden können und der Wärmeübergangskoeffizient vergleichsweise einfach, jedenfalls nährungsweise, bestimmbar ist. Die Erfindung hat erkannt, dass sich ein Wärmeübergangskoeffizient mittels einem bildgebenden Messsystem, jedenfalls näherungsweise, bestimmen lässt, das eine zur objektfernen Anordnung vorgesehene Messstation und einen zur objektnahen Anordnung vorgesehenen Wärmeübergangssensor aufweist. Erfindungsgemäß weist die Messstation eine elektrische bildgebende Einrichtung zur Aufnahme eines thermographischen Wärmebildes auf, dem eine Temperaturverteilung, insbesondere bildpunktweise, zuzuordnen ist. Die Einrichtung kann beispielsweise ein Bolometer oder dergleichen umfassen. Mit der bildgebenden Einrichtung kann eine Thermographie eines Zielobjekts erstellt werden. Die Messstation kann eine zur Übertragung von Messwerten ausgebildete Verbindung mit dem Wärmeübergangssensor in erfinderischer Weise nutzen, um zu dem thermoelektrischen Wärmebild weitere Messwerte zu erhalten, die es möglich machen, quantitative Angaben zum thermographischen Wärmebild zu ermitteln. Bevorzugt wird es möglich, eine Wärmeabgabe, insbesondere eine Verteilung einer Wärmeabgabe, an einem Zielobjekt quantitativanzugeben.

Gemäß dem Konzept der Erfindung ist vorgesehen, dass die Messstation einen objektfernen Temperatursensor zur Messung einer objektfernen Temperatur aufweist. Der Wärmeübergangssensor ist gemäß dem Konzept der Erfindung ausgelegt, Testwerte zur Ermittlung eines Wärmeübergangskoeffizienten vorzugeben.

Insgesamt sieht das Konzept der Erfindung zu einer Messstation einen Wärmeübergangssensor vor, mittels dem Testwerte zur Ermittlung eines für die quantitative Wärmeabgabe wesentlichen Wärmeübergangskoeffizienten vorgebbar sind. Das Konzept der Erfindung hat erkannt, dass ein Wärmeübergangskoeffizient im Bereich des Wärmeübergangssensors in geeigneter Weise angebbar ist und so eine quantitative Wärmeabgabe unter Nutzung des thermographischen Wärmebildes möglich ist.

Das Konzept der Erfindung vereint eine ganze Reihe von Vorteilen gegenüber herkömmlichen Verfahren, die auf der quantitativen Bestimmung einer Wärmeabgabe an einem Zielobjekt basieren. Grundsätzlich lassen sich quantitative Wärmeabgaben, insbesondere Wärmeverteilungen an einem Zielobjekt ermitteln; letztlich lassen sich so Gesamtverlustleistungen oder Verteilungen von Verlustleistungen, zum Beispiel an Bauwerksfassaden oder dergleichen Flächen an Zielobjekten ermitteln. Dazu benötigt das bildgebende Messsystem und das Verfahren gemäß dem Konzept der Erfindung grundsätzlich keine weiteren Angaben über das Zielobjekt selbst, diese sind in der Regel unbekannt. Insbesondere sind in der Regel die Wärmeleitfähigkeit und die Dicke von Wänden an einem Zielobjekt sowie eine Innentemperatur des Zielobjekts - wie zum Beispiel einem Gebäude oder dergleichen - regelmäßig unbekannt oder aber so heterogen, dass diese nur schwer zu berücksichtigen sind. Dennoch bietet das Konzept der Erfindung ein bildgebendes Messsystem und ein Verfahren mittels dem eine quantitative Wärmeabgabe ermittelbar ist; und zwar lediglich unter Messung von vergleichsweise leicht bestimmbaren Testwerten, insbesondere Temperaturen und Testwerten, die außerhalb des Objekts messbar bzw. bestimmbar oder bekannt sind. Dies ermöglicht eine besonders leichte und quantitative Bestimmung einer Wärmeabgabe ohne dass nähere Informationen über das Zielobjekt bekannt sein müssten.

Vorteilhafte Weiterbildungen der Erfindung sind den Unteransprüchen zu entnehmen und geben im Einzelnen vorteilhafte Möglichkeiten an, dass oben erläuterte Konzept im Rahmen der Aufgabenstellung sowie hinsichtlich weiterer Vorteile zu realisieren.

Besonders bevorzugt umfassen Testwerte an einem Testkörper des Wärmeübergangssensors vorgebbare Größen, insbesondere eine Wärmeleitfähigkeit (K) und Dickenabmessung (L), insbesondere zusätzlich eine Wärmeemission ($\varepsilon$) am Testkörper. Vorzugsweise ist der Testkörper Teil einer Wärmeübergangsanordnung und in Baueinheit mit einem Temperatursensor zur Messung einer ersten objektnahen Temperatur ($T_A$) am Wärmeübergangssensor zur Ermittlung eines Wärmeübergangskoeffizienten (h) gebildet, wobei die Wärmeübergangsanordnung neben dem Testkörper weiter umfasst:

- eine Wärmequelle mit vorbekannter Wärmeflussdichte ($q_I$) auf wenigstens einer dem Zielobjekt zuwendbaren Rückseite und/oder Innenseite eines Testkörpers,
- wenigstens einen weiteren Temperatursensor, wenigstens auf einer dem Zielobjekt zuwendbaren Rückseite und/oder Innenseite eines Testkörpers zur Messung einer zweiten objektnahen Temperatur ($T_I$).

Insbesondere kann der Wärmeübergangssensor einen Temperatursensor zur Messung einer ersten objektnahen Temperatur aufweisen. Zusätzlich oder alternativ weist der Wärmeübergangssensor die Wärmeübergangsanordnung auf, mittels der Testwerte zur Ermittlung eines Wärmeübergangskoeffizienten vorgebbar sind. Es kann insbesondere mehr als ein Temperatur- und/oder Wärmeübergangssensor vorgesehen sein. Möglich ist z. B. eine vorteilhafte Verteilung einer Anzahl von Sensoren.

Dazu wurde insbesondere erkannt, dass es möglich ist, den Wärmeübergangssensor zur Kalibrierung einer Temperaturverteilung auf Werte der wenigstens einen ersten objektnahen Temperatur zu nutzen. In einer besonders bevorzugten Weiterbildung des Verfahrens ist dazu vorgesehen, dass der Wärmeübergangssensor von der bildgebenden Einrichtung unter Aufnahme eines thermographischen Wärmebildes im thermographischen Bild mit aufgenommen wird, d. h. Teil des thermographischen Wärmebildes ist. Auf diese Weise ist die am Wärmeübergangssensor gemessene erste objektnahe Temperatur zum Einen an sich bekannt und zum Anderen Teil des thermographischen Wärmebildes. So ist jedenfalls einem Bildpunkt des Wärmebildes die erste objektnahe Temperatur zuzuordnen; dieser Umstand kann vorteilhaft zur Kalibrierung der gesamtem Temperaturverteilung unter bildpunktweiser Zuordnung von Temperaturen im Wärmebild genutzt werden.

In besonders bevorzugter Weiterbildung des Konzepts der Erfindung sieht das Messverfahren weitere Schritte vor:

- bildpunktweises Zuordnen des thermographischen Wärmebildes zu der Temperaturverteilung unter Kalibrieren desselben auf Werte der wenigstens einen ersten objektnahen Temperatur,
- Bestimmen eines Wärmeübergangskoeffizienten wenigstens mittels der Testwerte und,
- quantitatives Angeben einer Wärmeabgabe unter Nutzung des Wärmeübergangskoeffizienten, der kalibrierten Temperaturverteilung und der objektfernen Temperatur sowie einem Abbildungsmaßstab des thermoelektrischen Bildes.

Das vorgenannte weiterbildende Konzept kann für ein bildgebendes Messsystem mit einer Recheneinheit genutzt werden. Die Recheneinheit ist vorteilhaft ausgebildet, die bildpunktweise zuordenbare Temperaturverteilung auf Werte der wenigstens einen ersten objektnahen Temperatur zu kalibrieren und wenigstens mittels der Testwerte einen Wärmeübergangskoeffizienten zu bestimmen. Insbesondere ist die Recheneinheit weiter ausgebildet, aus dem Wärmeübergangskoeffizienten der kalibrierten Temperaturverteilung und der objektfernen Temperatur sowie einem Abbildungsmaßstab des thermoelektrischen Bildes eine Wärmeabgabe quantitativ anzugeben. Zusätzlich oder alternativ ist die Recheneinheit bevorzugt ausgebildet, wenigstens mittels der Testwerte den Wärmeübergangskoeffizienten zu bestimmen.

Im Rahmen einer besonders bevorzugten Weiterbildung ist die Recheneinheit derart ausgebildet, dass diese wenigstens mittels der objektfernen Temperatur und der ersten objektnahen Temperatur, den Wärmeübergangskoeffizienten bestimmt. Vorteilhaft ist hierbei die synergetische Nutzung der mittels des objektfernen Temperatursensors gemessenen objektfernen Temperatur sowie der mittels des Temperatursensors gemessenen ersten objektnahen Temperatur zur Bestimmung des Wärmeübergangskoeffizienten.

Im Rahmen einer bevorzugten Weiterbildung weist die Messstation eine Distanzmesseinrichtung zur berührungslosen Messung einer Distanz auf. Insbesondere ist eine Distanz zwischen einem Referenzpunkt und wenigstens einem Messpunkt am Zielobjekt berührungslos, insbesondere mittels einer Laufzeitmessung unter Verwendung optischer Messstrahlung, messbar. Die Distanz zwischen dem Referenzpunkt und dem Messpunkt ist, insbesondere auch bei erschwerter oder nicht möglicher Zugänglichkeit zu einem durch die Distanz abgedeckten Gelände, schnell und exakt bestimmbar. Bevorzugt ist die Recheneinheit ausgebildet, aus der Distanz, einem Fokuslängenwert und einer Pixelfläche des thermographischen Bildes den Abbildungsmaßstab zu ermitteln. Durch diese rechentechnische Ermittlung des Abbildungsmaßstabs kann auf die direkte Bestimmung der bauwerklichen Abmessungen, die üblicherweise aus bautechnischen Dokumenten zu erfolgen hätte, verzichtet werden. Diese Vereinfachung bringt eine Zeit- und Kostenersparnis.

Besonders bevorzugt weist der Wärmeübergangssensor einen Testkörper auf, wobei der Temperatursensor zur Messung einer ersten objektnahen Temperatur wenigstens auf einer der Messstation zuwendbaren Vorderseite eines Testkörpers angeordnet ist. Die Bereitstellung eines Testkörpers stellt einen konstruktiven Vorteil dahingehend dar, als dass eine definierte Anordnung des objektnahen Temperatursensors möglich ist und die vom objektnahen Temperatursensor gemessene Temperatur identisch mit der der Messstation zuwendbaren Vorderseite des Testkörpers ist.

Insbesondere ist eine Wärmeübergangsanordnung am Testkörper derart gebildet, dass die Testwerte zur Ermittlung eines Wärmeübergangskoeffizienten am Testkörper vorgebbar und/oder bestimmbar sind. Der Testkörper wird hierbei vorteilhaft mittelbar zur Ermittlung eines Wärmeübergangskoeffizienten genutzt. Insbesondere weist der Testkörper vorbekannte Testwerte einer Wärmeleitfähigkeit und Dickenabmessung, insbesondere zusätzlich Wärmeemission, auf. Vorteilhaft sind hierbei die konstruktiven sowie materialtechnischen Eigenschaften des Testkörpers in definierter Weise vorgebbar; ersetzen also mit Vorteil die weitgehend unbekannten Eigenschaftes des Zielobjekts.

Vorzugsweise weist die Wärmeübergangsanordnung des Wärmeübergangssensors eine Wärmequelle mit vorbekannter Wärmeflussdichte auf wenigstens einer dem Zielobjekt zuwendbaren Rückseite und/oder Innenseite eines Testkörpers auf. Die Einführung einer vorbekannten Wärmeflussdichte im Rahmen der beschriebenen Anordnung ermöglicht die genauere Ermittlung des Wärmeübergangskoeffizienten anhand quantitativ bekannter Größen.

In Rahmen einer weiterbildenden Variante ist vorgesehen, dass die Wärmeübergangsanordnung des Wärmeübergangssensors wenigstens einen weiteren Temperatursensor, wenigstens auf einer dem Zielobjekt zuwendbaren Rückseite und/oder Innenseite eines Testkörpers zur Messung einer zweiten objektnahen Temperatur aufweist. Als Variante kann zusätzlich oder alternativ zur oben beschriebenen Anordnung mit einer Wärmequelle mit vorbekannter Wärmeflussdichte, ein thermisches Verhalten auch durch die Einführung einer zweiten objektnahen Temperatur ermittelt werden. Vorteilhaft wird dadurch der Aufwand zur Definition einer stabilen Wärmeflussdichte reduziert.

Im Rahmen einer bevorzugten Weiterbildung weist das bildgebende Messsystem eine Ausgabeeinheit auf, mittels der die kalibrierte Temperaturverteilung dargestellt werden kann. Zusätzlich oder alternativ ist eine Eingabeeinheit ausgebildet, Testwerte einzugeben. Die Darstellung einer kalibrierten Temperaturverteilung erleichtert qualifizierte Aussagen hinsichtlich bautechnischer Maßnahmen.

Im Rahmen einer besonders bevorzugten konstruktiven Weiterbildung weist die Messstation ein Gehäuse auf, in dem die bildgebende Einrichtung, der objektferne Temperatursensor, ein Sende- und/oder Empfangsteil der Übertragungsanordnung angeordnet ist, insbesondere zusätzlich die Recheneinheit, sowie ggfs. eine Ausgabeeinheit und/oder Eingabeeinheit, angeordnet ist. In der baupraktischen Anwendung sind erforderliche Rüstzeiten reduziert. Die Messstation lässt sich kompakt im Gehäuse unterbringen und das Gehäuse schützt vor unerwünschten Einwirkungen wie Feuchtigkeit, Schmutz o. ä. die in der baupraktischen Anwendung vorherrschen.

Im Rahmen einer bevorzugten Variante sind die Testwerte zur Ermittlung eines Wärmeübergangskoeffizienten mittels einer Ultraschallmesseinheit bestimmbar. Die Ultraschalleinheit verwirklicht ein alternatives Prinzip zur Bestimmung konvektiver Einflüsse. Dies ist insbesondere bei strukturierten Oberflächen von Vorteil, an denen sich eine komplexe Strömungsstruktur ausbilden kann.

**Ausführungsbeispiele**

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:

Fig. 1 in Ansicht (A) eine schematische Darstellung eines bildgebenden Messsystems zur Messung an einem Zielobjekt, hier einer Bauwerksfassade, und in Ansicht (B) ein thermographisches Wärmebild des bildgebenden Messsystems gemäß des Standes der Technik;

Fig. 2 eine schematische Darstellung einer bevorzugten Ausführungsform eines bildgebenden Messsystems, umfassend zwei Wärmeübergangssensoren und die Messstation;

Fig. 3 eine schematische Darstellung eines der Wärmeübergangssensoren aus Fig. 2;

Fig. 4 eine schematische Darstellung eines vorteilhaften Aufbaus eines bildgebenden Messsystems;

Fig. 5 eine schematische Darstellung eines Messverfahrens zur Messung einer Wärmeabgabe an einem Zielobjekt.

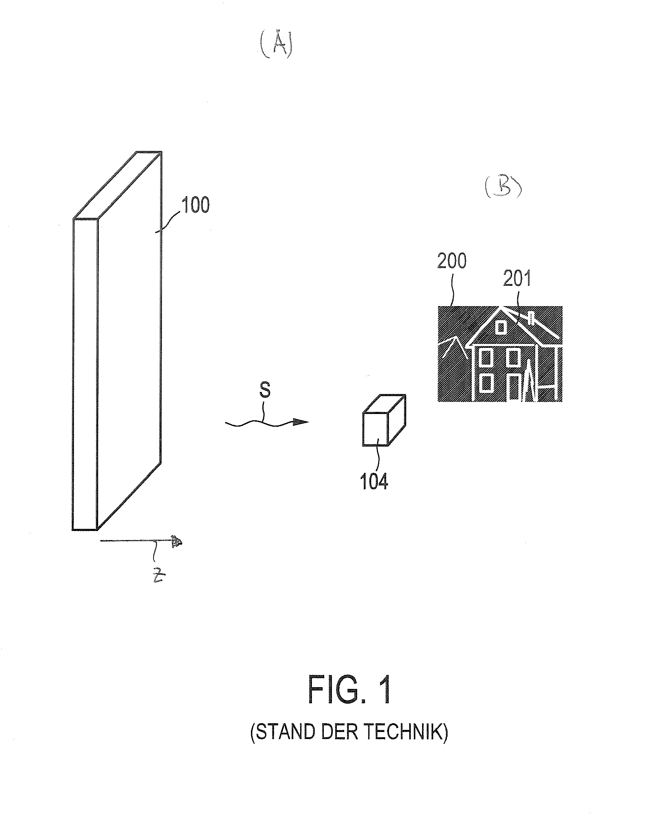

Fig. 1 zeigt in Ansicht (A) beispielhaft eine übliche Situation bei der bildgebenden thermographischen Messung einer Wärmeabgabe an einem Zielobjekt 100, das vorliegend in Form einer Bauwerksfassade gezeigt ist. Allein mit einer Wärmebildkamera 104, wird ein in Ansicht (B) symbolisch dargestelltes thermographisches Wärmebild 200 aufgenommen. Die in dem thermographischen Wärmebild 200 als Farbschattierung oder dergleichen gezeigte Temperaturverteilung 201 auf dem Zielobjekt 100 liefert wichtige Informationen, um schlecht isolierte Bereiche, wie z. B. Fenster oder dergleichen orten zu können. Die Temperaturverteilung 201 ist zu diesem Zweck zwar sehr hilfreich, kann grundsätzlich aber nur einen qualitativen Wert indizieren, der Orte vergleichsweise hoher Energieverluste bzw. Orte vergleichsweise geringerer Energieverluste an einem Zielobjekt 100 gegenüberstellt. Hintergrund ist, dass zwar die Messung in einem Bolometer der Wärmebildkamera 104 grundsätzlich relativ genau ist, jedoch eine die Wärmebildkamera 104 über eine Distanz in z-Richtung senkrecht zum Zielobjekt 100 erreichende Wärmestrahlung S gegebenenfalls nur einen Bruchteil - insbesondere regelmäßig hinsichtlich des Ursprungsorts verfälschten Bruchteil - derjenigen Wärmestrahlung darstellt, die tatsächlich vom Zielobjekt 100 abgegeben wurde. Ursache ist der von Witterungsbedingungen wie Windrichtung, Luftfeuchtigkeit und dergleichen abhängige konvektive Wärmeabtransport in der Distanz zwischen dem Zielobjekt 100 und der Wärmebildkamera 104. So hat sich gezeigt, dass die die Wärmebildkamera 104 erreichende Wärmestrahlung an der Oberfläche des Zielobjekts 100, also im Ursprung bereits vergleichsweise stark von der Windgeschwindigkeit sowie von einer Windrichtung zu der Oberfläche des Zielobjekts 100 als auch vom Winkel eines Windes zu der zu betrachtenden Oberfläche des Zielobjekts 100 abhängt.

Darüberhinaus sind zur Bestimmung der tatsächlichen, aus dem Inneren des Zielobjekts 100 durch die genannte Oberfläche des Zielobjekts 100 ausgetragene Wärmeabgabe weitere Informationen über die Oberfläche des Zielobjekts 100 erforderlich. Solche Informationen stehen einem Anwender bei Aufnahme eines Wärmebildes 200 mit einer einfachen Wärmebildkamera 104 regelmäßig nicht zur Verfügung.

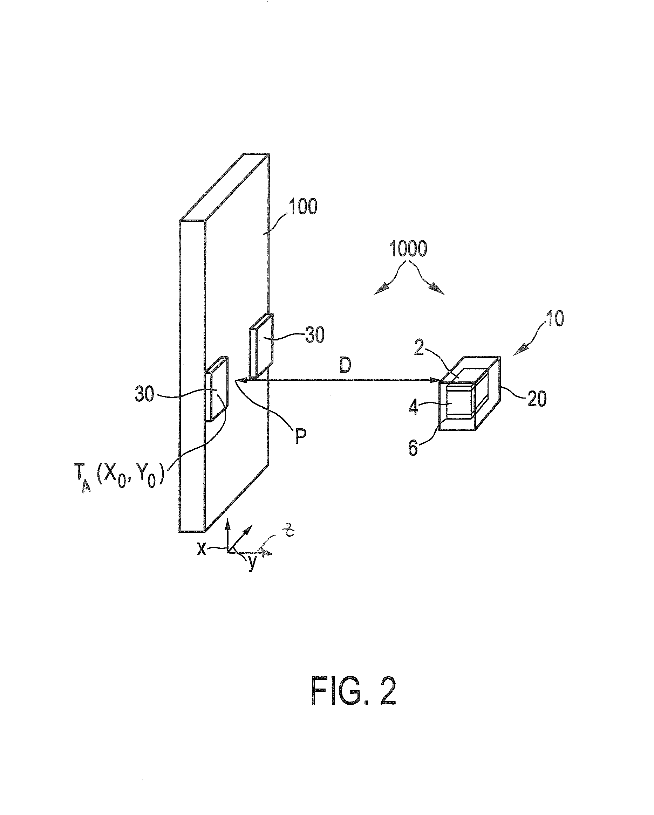

Dem Konzept der Erfindung folgend wurde erkannt, dass eine quantitative Bestimmung eines Energieverlustes - z. B. durch eine Außenwand eines Gebäudes oder dgl. Oberfläche eines Zielobjekts 100 - mit einem in Fig. 2 gezeigten, bildgebenden, thermographischen Messsystem 1000 möglich ist. Das Messsystem 1000 gemäß dem Konzept der Erfindung weist bei der vorliegenden Ausführungsform eine zur objektfernen Anordnung vorgesehene Messstation 10 und in dieser Ausführungsform zwei zur objektnahen Anordnung vorgesehenen Wärmeübergangssensoren 30 auf. Die lediglich beispielhafte Darstellung verdeutlicht, dass das bildgebende Messsystem 1000 insbesondere eine Anzahl von geeignet über das Zielobjekt 100 verteilte Wärmeübergangssensoren 30 umfassen kann. Je nach Bedarf kann die Dichte der Wärmeübergangssensoren 30 am Zielobjekt 100 mittels deren Anzahl und Abstand vorteilhaft eingestellt werden. Zur Realisierung des Konzepts der Erfindung eignet sich gegebenenfalls auch lediglich ein einziger Wärmeübergangssensor 30 am Zielobjekt 100 zusammen mit der Messstation 10.

Im Einzelnen zeigt Fig. 2 die Messstation 10, in deren Gehäuse 20 eine an sich bekannte elektrische bildgebende Einrichtung 4 zur Aufnahme eines thermographischen Wärmebildes, beispielsweise in Form eines Bolometers oder dergleichen, angeordnet ist. Die Einrichtung 4 in Form einer Wärmebildkamera weist eine aus Germanium bestehende Linse auf, die ein Wärmebild, wie es beispielhaft in Fig. 1 gezeigt ist, auf ein Bolometer-Chiparray abbildet. Das Bolometer-Chiparray übernimmt dabei die Funktion eines CCD-Chips herkömmlicher Kameras. Die Anzahl der Pixel heutiger Bolometer-Arrays reichen von 160 x 120 bis 640 x 480. Das Bild des Bolometer-Arrays wird prozessiert und auf einem nicht näher gezeigten Display am Gehäuse 20 der Messstation 10 visualisiert. Dabei wird für das Display der Einrichtung 4 der Messstation 10 der Fig. 2 eine Falsch-Farben-Darstellung der Temperaturverteilung verwendet, bei welcher verschiedene Farben verschiedene Temperaturen repräsentieren.

Das bildgebende thermographische Messsystem 1000 kann in der in Fig. 2 gezeigten Form insbesondere verwendet werden zum Aufspüren von Baumängeln, zur Qualitätssicherung bei der Abnahme von Bauleistungen, zum Nachweis von Kälte- bzw. Wärmebrücken, jedoch auch zur Identifizierung von Schimmel- und Schwammbefall. Insbesondere dient ein Messsystem 1000 zur Leckageortung an Zielobjekten 100. Dies können z. B. durchfeuchtete Dächer - auch Flachdächer oder Fassaden - oder unterirdisch verlegte Rohrleitungen sein. Das Messsystem 1000 kann über das thermographische Wärmebild indirekt auch Aussagen über notwendige Schallschutzmaßnahmen begründen. Ganz allgemein lässt sich mit einem Messsystem 1000 gemäß dem Konzept der Erfindung, wie es in Fig. 2 gezeigt ist, zunächst ein Energieverlust an einem Zielobjekt 100 quantitativ bestimmen. Dies kann im Einzelfall die Ortung und Eingrenzung von Sanierungsmaßnahmen, z. B. bei Luftundichtigkeiten oder bei Schäden hinter Putz umfassen. Auch lassen sich Strukturen an einem Zielobjekt 100 über Energieverluste erkennen, wie z. B. ein Fachwerk, verlegte Rohre, z. B. bei einer Fußbodenheizung oder Wasserleitungen oder Elektrokabelinstallationen, sichtbar machen. Im Einzelfall eignet sich ein Messsystem 1000 auch zur Sichtbarmachung und zum Nachweis eines Taupunktes in solchen und anderen Problembereichen an einem Zielobjekt 100.

Ohne eine Einschränkung hinsichtlich der Verwendbarkeit der im folgenden im Detail beschriebenen Ausführungsform eines Messsystems 1000 zu machen, wird das Messsystem 1000 beschrieben anhand einer quantitativen Bestimmung einer gesamten Wärmeverlustleistung an einer Oberfläche des Zielobjekts 100, nämlich an einer Gebäudefassade eines Gebäudes. Das dabei der Funktionalität des Messsystems 1000 zugrundeliegende einfache mathematische Modell ist nicht einschränkend gemeint, sondern stellt lediglich eine bevorzugte vereinfachte Ausführungsform dar, um die Funktionalität des Messsystems 1000 gemäß dem Konzept der Erfindung - nämlich bestehend aus einer objektfernen Messstation 10 und einem objektnahen Wärmeübergangssensor 30 - beispielhaft zu beschreiben.

Bereits aus Fig. 2 ist ersichtlich, dass in Abgrenzung zum Stand der Technik die Messstation 10 neben der elektrischen bildgebenden Einrichtung 4 auch einen objektfernen Temperatursensor 6 und eine berührungslose Distanzmesseinrichtung 2 umfasst. Die bildgebende Einrichtung 4 zur Aufnahme des thermographischen Wärmebildes, die Distanzmesseinrichtung 2 und der Temperatursensor 6 sind zusammen und kompakt in dem Gehäuse 20 der Messstation 10 angeordnet. Der objektferne Temperatursensor 6 dient zur Messung einer objektfernen Temperatur $T_{ref}$ am Ort der Messstation 10. Die Distanzmesseinrichtung 2 ist vorliegend zur berührungslosen Messung einer Distanz D zwischen einem nicht näher bezeichneten Referenzpunkt der Distanzmesseinrichtung 2 und einem Messpunkt P am Zielobjekt 100 ausgelegt. Dazu nutzt die Distanzmesseinrichtung 2 beispielsweise optische Messstrahlung in modulierter Form, so dass mittels einer Laufzeitmessung für einen reflektierten oder gestreuten Teil der Messstrahlung die Distanz D bestimmt werden kann. Am Ort der Messstation 10 sind damit die Distanz D und eine objektferne Temperatur $T_{ref}$ und für das Zielobjekt 100 eine Temperaturverteilung T für die Oberfläche des Zielobjekts 100 in Abhängigkeit des Ortes auf der Oberfläche bekannt. Die Temperaturverteilung T umfasst insbesondere auch eine Temperatur $T_A$ am Ort des Wärmeübergangssensors 30. Die Wärmebildkamera misst zunächst nur eine relative Temperaturverteilung, die mittels

$T_A$ in eine absolute Temperaturverteilung umgerechnet werden kann.

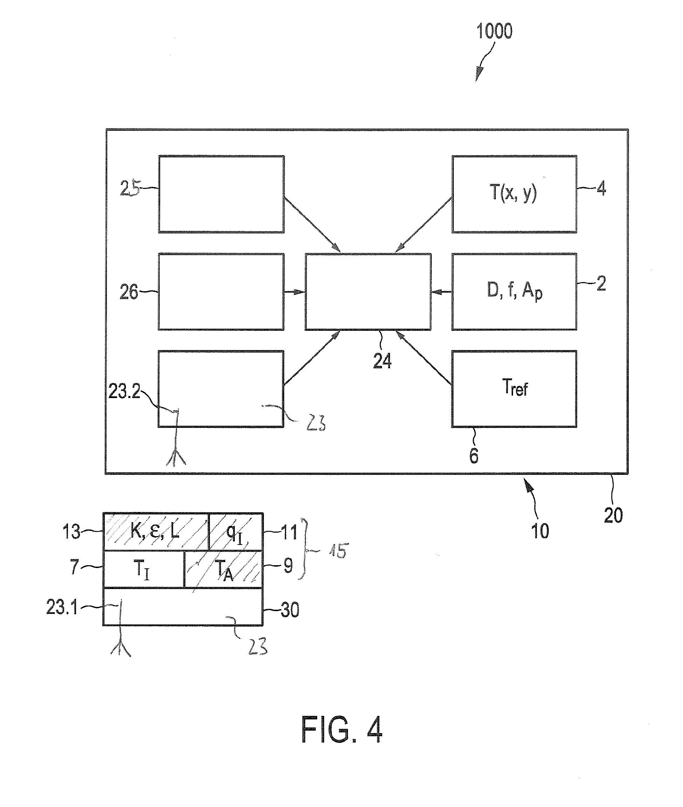

Des Weiteren sind am Ort der Messstation 10 auch die der Einrichtung 4 inhärenten Werte einer Fokuslängenwert f und einer Pixelgröße Ap bekannt. Mit der Distanz, dem Fokuslängenwert f und der Pixelgrösse Ap kann ein Abbildungsmassstab ermittelt werden, mit dem die Koordinaten (x, y) der Objektebene dem entsprechenden Bildkoordinaten im Wärmebild zugeordnet werden. Um eine besonders hohe Genauigkeit dieser Zuordnung zu erhalten, sollte die Distanzmessung zumindest näherungsweise orthogonal zur Objektfläche erfolgen, d.h. der Distanzmessstrahl zumindest näherungsweise senkrecht zur Messobjektoberfläche orientiert sein. Konkret ist eine Temperaturverteilung T (x, y) in Abhängigkeit des Orts (x, y) an der Oberfläche des Zielobjekts 100 als auch die dem Ort $(x_0, y_0)$ des Wärmeübergangssensors 30 zuzuordnende gemessene Temperatur $T_A = T(x_0, y_0)$ bekannt. Im Einzelnen wird auf diese Größen noch im Zusammenhang der Fig. 4 Bezug genommen.

Im Folgenden wird beispielhaft zunächst das oben genannte einfache mathematische Modell erläutert, mit dessen Hilfe sich unter anderem mittels der zuvor genannten Messgrößen bzw. an sich bekannter Größen der Messstation 10 und des Wärmeübergangssensors 30 eine gesamte Wärmeverlustleistung durch die Oberfläche des Zielobjekts 100 bestimmen lässt. Grundlage dafür ist die vorerwähnte örtliche Temperaturverteilung T (x, y) der Temperatur T an der Oberfläche des Zielobjekts 100. Um die gesamte Wärmeverlustleistung quantitativ zu bestimmen, wird über die Temperaturverteilung T (x, y) entlang des Ortes (x, y) integriert, wobei weitere Messwerte und Testwerte mit dem Messsystem 1000 gemäß dem Konzept der Erfindung bestimmt oder vorgegeben werden. Unter Testwerte sind solche Werte zu verstehen, die am Wärmeübergangssensor in vorher bestimmter Weise, z.B. hier durch die Eigenschaften eines Testkörpers 13, zur Verfügung stehen.

Insgesamt ergibt sich eine Wärmeflussdichte nach

$$(1) \qquad q_{out} = h * (T_{ref}' - T') + \varepsilon * \sigma * (T_{ref}'^4 - T'^4)$$

in der Einheit W/m². Der erste Term beschreibt den Wärmetransport an der Oberfläche des Zielobjekts 100 durch Konvektion, während der zweite Term die Strahlung beschreibt, die von einer Wärmebildkamera erfassbar ist. $\sigma = 5,67 * 10^{-8}$ W / (m² K⁴) bezeichnet die Stefan-Boltzmann-Konstante und $\varepsilon$ ist der Emissionsgrad der Oberfläche am Zielobjekt 100. Der Emissionsgrad $\varepsilon$ ist vom Material, der Oberflächenbeschaffenheit, der Wellenlänge, jedoch kaum von der Temperatur T selbst abhängig. Der Einfluss der Temperatur auf den Emissionsgrad $\varepsilon$ kann bei Messungen im Temperaturbereich von 0° C bis 100° C in den meisten Fällen vernachlässigt werden, wovon die vorliegende Ausführungsform im Wesentlichen ausgeht. Hier nicht beschriebene andere variierte Ausführungsformen können diesen Term auch berücksichtigen. Grundsätzlich besitzen jedoch viele Stoffe im mittleren Infrarot einen von der Wellenlänge nahezu unabhängigen Emissionsgrad $\varepsilon$ nahe dem Wert 1. Beispiele sind Glas, mineralische Stoffe, Farben und Lacke beliebiger Farbe, Eloxal-Schichten beliebiger Farbe, Plastikwerkstoffe außer Polyethylen, Holz und andere Baustoffe, Wasser und Eis - also Materialien, wie sie im Bauhaupt- oder Bauhilfsgewerbe zu finden sind. Die vorliegende Ausführungsform nimmt deshalb für den Emissionsgrad einen mittleren Wert von 0,94 an. Zwischen weißen und schwarzen Flächen variiert $\varepsilon$ zwar geringfügig im Bereich von 0,9 - 0,98, was jedoch zur Erläuterung des Prinzips der Ausführungsform als sekundär angenommen wird.

Für die weitere quantitative Bestimmung der gesamten Wärmeverlustleistung an der Oberfläche des Zielobjekts 100 wird vorliegend der Wärmeübergangskoeffizient h - konkret auch Konvektions-Wärmetransportkoeffizient $\alpha$ genannt - relevant, der z. B. an der Außenwand einer Gebäudefassade zu bestimmen ist. Der im Folgenden als Wärmeübergangskoeffizient h bezeichnete Koeffizient kann stark von der Windgeschwindigkeit und anderen Umwelteinflüssen an der Außenwand einer Gebäudefassade, also an einer Oberfläche des Zielobjekts 100, abhängen. Typisch sind Werte zwischen 2 W / (m² K) und 25 W / (m² K). Zur quantitativen Bestimmung der gesamten Wärmeabgabe $q_{out}$ am Zielobjekt 100 ist h insofern jedenfalls näherungsweise zu bestimmen. Ist h jedoch einmal bekannt, lässt sich im Rahmen der vorliegenden Ausführungsform die gesamte Wärmeverlustleistung durch Konvektion bestimmen als Wärmeabgabe

$$(2) \qquad Q_{out} = M^2 * A_p * \sum q_{out,n} \approx (\tfrac{D}{f} - 1)^2 * A_p * h \sum (T_{ref}' - T_n'),$$

wobei in erster Näherung der Wärmeverlust durch Strahlung vernachlässigt wird. Dabei nutzt die vorliegende Ausführungsform die Messung der Distanz D für eine Flächenabschätzung an der Oberfläche des Zielobjekts 100, nämlich zur Bestimmung eines Abbildungsmaßstabs für das thermographische Wärmebild

$$(3) \qquad M = \frac{D}{f} - 1$$

Mit dem Abbildungsmassstab werden Koordinaten, Abstände bzw. Flächen im Wärmebild in Koordinaten (x, y), Abstände bzw. Flächen am Messobjekt zumindest näherungsweise zugeordnet, wobei die Blickrichtung der Wärmebildkamera zwecks optimierter Genauigkeit möglichst senkrecht zur Messobjektoberfläche orientiert sein sollte. Die gesamte Wärmeverlustleistung $Q_{out}$ ergibt sich somit als Summe bzw. aufintegrierter Wert aus, der jedem Pixel des thermographischen Wärmebildes zugeordneten Wärmeflussdichte multipliziert mit der jedem Pixel zugeordneten Wandfläche $A_p * M^2$, wobei n die Anzahl der Pixel des thermographischen Wärmebildes darstellt.

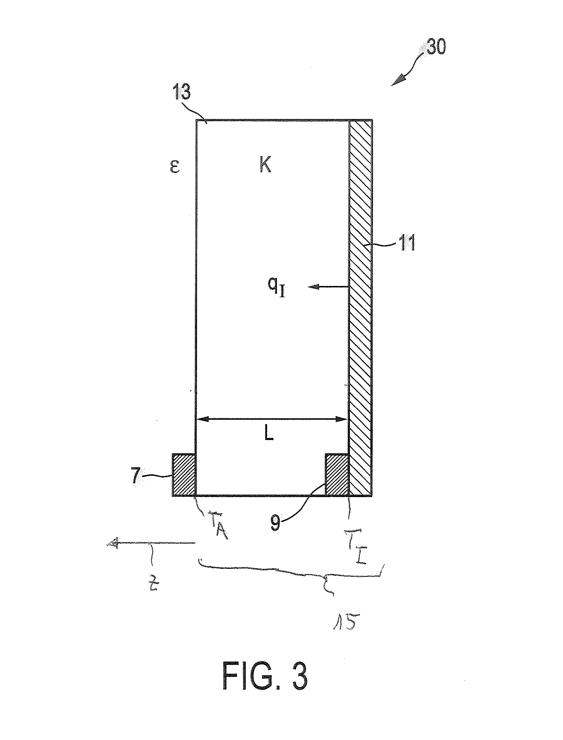

Gemäß dem Konzept der Erfindung wurde erkannt, dass der Wärmeübergangskoeffizient h aufgrund seiner Witterungsabhängigkeit, jedoch auch Abhängigkeit von der Konstruktion einer Fassade einer Gebäudeaußenseite, an geeigneter Stelle bzw. an einer Verteilung von geeigneten Stellen an der Oberfläche eines Zielobjekts 100 gemessen werden sollte. Dazu dient der in Fig. 3 näher dargestellte Wärmeübergangssensor 30, der in dieser Form als Teil einer Verteilung einer Anzahl von solchen Sensoren 30 am Zielobjekt 100 angebracht sein kann. Die vom Wärmeübergangssensor 30 ermittelten Messwerte bzw. bekannten Testwerte können mittels einer in Fig. 4 symbolisch dargestellten Funkanordnung 23 im Wärmeübergangssensor 30 und der Messstation 10 kommuniziert werden.

Im Einzelnen zeigt Fig. 3 eine detaillierte schematische Darstellung eines der Wärmeübergangssensoren 30 der Fig. 2. Der Wärmeübergangssensor 30 weist einen zweiten objektnahen Temperatursensor 7 auf der der Messstation 10 zugewandten Vorderseite eines Testkörpers 13 sowie - als Teil einer Wärmeübergangsanordnung 15 - den Testkörper 13 und einen ersten objektnahen Temperatursensor 9 auf der der Messstation 10 abgewandten Rückseite des Testkörpers 13 auf. Der Testkörper 13 selbst hat eine Dicke L, eine Wärmeleitfähigkeit K und einen Wärmeemissionsgrad $\varepsilon$ - letztere Größen haben Werte, die auch als Testwerte bezeichnet sind.

Darüberhinaus ist auf der der Messstation abgewandten Rückseite des Testkörpers 13 - als weiterer Teil einer Wärmeübergangsanordnung 15 - eine Wärmequelle 11 angeordnet, deren Wärmeflussdichte $q_l$ bekannt ist. Außerdem sind also auch die Dicke L, die Wärmeleitfähigkeit K und der Emissionsgrad $\varepsilon$ als Testwerte aufgrund der Beschaffenheit des Testkörpers 13 bekannt. Mit anderen Worten stellt der Testkörper 13 eine an sich bekannte Materialeigenschaft zur Verfügung, die zur Bestimmung des Wärmeübergangskoeffizienten h gemäß dem Konzept der Erfindung genutzt wird, so dass eine genaue Kenntnis der Oberfläche des Zielobjekts 100 grundsätzlich nicht erforderlich ist. Dem Konzept der Erfindung folgend ersetzt der Testkörper 13 im Wärmeübergangssensor 30, sozusagen, die nicht bekannten Eigenschaften des Zielobjekts 100.

Ein mittels der Wärmeübergangsanordnung 15 realisierbare einfaches Modell der Wärmeleitung liefert für den Testkörper 13 der Fig. 3 die Temperaturabhängigkeit

$$(4) \qquad T(z) = T_A + \frac{q_l}{K} * (L - z) = -\frac{T_l - T_A}{K} * z + T_l$$

Mit $T(L) = T_A$ folgt für den Wärmeübergangskoeffizienten h aus Gl. (1)

$$(5) \qquad h = \frac{q_l - \varepsilon * \sigma (T_A^4 - T_{ref}^4)}{T_A - T_{ref}}$$

Unter Vernachlässigung der Wärmestrahlung ($\varepsilon = 0$) und für den Fall, dass die Wärmeflussdichte $q_l$ der Wärmequelle 11 nicht exakt bekannt ist, lässt sich h auch unter Messung von der zweiten objektnahen Temperatur $T(0) = T_l$ mittels dem zweiten objektnahen Temperatursensor 9 wie folgt bestimmen:

$$(6) \qquad h = \frac{K * (T_I - T_A) / L}{T_A - T_{ref}}$$

Anders ausgedrückt lässt sich der Wärmeübergangskoeffizient h aufgrund einer vorgegebenen oder mit $T_l$ bestimmbaren definierten Wärmeflussdichte $q_l$ am Testkörper 13 und in Kenntnis der ersten objektnahen Temperatur $T_A$ und der objektfernen Temperatur $T_{ref}$ bestimmen. Dieses Modell geht von der Annahme aus, dass bei einer definierten Wärmeleistung der Wärmequelle 11 ein thermisches Gleichgewicht im Testkörper 13 ausgebildet ist und bildet eine Kontinuitätsbedingung an der Oberfläche des Testkörpers 13. Dieses kann durch die beiden in obiger Weise mittels der Temperatursensoren 7, 9 messbaren Temperaturen $T_A$ und $T_l$ charakterisiert werden.

Da außerdem der Wärmeübergangssensor 30 objektnah an der Oberfläche des Zielobjekts 100 angebracht ist, wirken auf diesen die gleichen konvektiven Einflüsse wie an der Oberfläche des Zielobjekts 100, also wie beispielsweise an einer Bauwerksfassade eines Gebäudes. Da einerseits über die bildgebende Einrichtung 4 aufgrund der Wärmestrahlung S eine gemessene Wärmeflussdichte bzw. Temperatur $T(x_0, y_0)$ relativ zu den Temperaturen an anderen mit der Wärmebildkamera aufgenommenen Orten bekannt ist, andererseits aber die erste objektnahe Temperatur $T_A$ an dem Ort $(x_0, y_0)$ des Wärmeübergangssensors 30 gemessen ist, kann über Gleichsetzung von $T(x_0, y_0)$ und $T_A$ eine Temperaturverteilung $T(x, y)$ durch $T(x_0, y_0) = T_A$ kalibriert und damit der durch konvektive Einflüsse verursachte Fehler bei der gemessenen Temperatur $T(x_0, y_0)$ eliminiert werden. Insofern ist die Temperaturverteilung nach dem vorliegenden Modell an den Orten $(x_0, y_0)$ exakt bestimmt und dient als Referenzwert für die Temperaturverteilung im Wärmebild.

Im Einzelnen Bezug nehmend auf Fig. 4 ist das bildgebende thermographische Messsystem 1000 mit dem Wärmeübergangssensor 30 sowie der Messstation 10 und den entsprechenden Einheiten im Gehäuse 20 derselben gezeigt. Den einzelnen Einheiten des Wärmeübergangssensors 30 und der Messstation 10 sind die zuvor erläuterten Messwerte und Testwerte des Testkörpers 13 zugeordnet. Die Wärmeübergangsanordnung 15 ist in Fig. 4 schraffiert dargestellt.

Wie erläutert weist der Wärmeübergangssensor 30 die Wärmeübergangsanordnung 15, d.h. den Testkörper 13 zur Vorgabe der an sich bekannten Testwerte K, $\varepsilon$, L und eine Wärmequelle 11 zur Vorgabe der definierten Wärmeflussdichte $q_I$ auf. Der Wärmeübergangssensor 30 weist vorliegend auch als Teil der Wärmeübergangsanordnung 15 einen ersten objektnahen Temperatursensor 7 zur Bestimmung der ersten objektnahen Temperatur $T_A$ zusätzlich zum zweiten objektnahen Temperatursensor 9 zur Bestimmung der zweiten objektnahen Temperatur $T_I$ auf. Die Messwerte in Form der Temperaturen $T_A$, $T_I$ und die vorgenannten Testwerte können über ein erstes Funkmodul 23.1 der vorgenannten Funkanordnung 23 des Wärmeübergangssensors 30 an ein zweites Funkmodul 23.2 der Funkanordnung 23 in der Messstation 10 übermittelt werden.

Die Messstation 10 selbst weist einen weiteren objektfernen Temperatursensor 6 zur Bestimmung der objektfernen Temperatur $T_{ref}$, eine elektrische bildgebende Einrichtung 4 zur Bestimmung der Temperaturverteilung $T(x, y)$ in gemessener Form auf einer Oberfläche des Zielobjekts 100 und die Distanzmesseinrichtung 2 zur Bestimmung der Distanz D bzw. Vorgabe des Fokuslängenwerts f und der Pixelgröße Ap, auf. So sind alle in Fig. 4 gezeigten Messwerte und Testwerte einer Recheneinheit 24 zuführbar, die nach den vorgenannten Rechenvorschriften für h (Formel 6) und $Q_{out}$ (Formel 2) die gesamte Wärmeverlustleistung am Zielobjekt 100 bestimmen kann - dies gemäß dem Konzept der Erfindung in quantitativ verlässlicher und jedenfalls näherungsweise korrekter Form.

Die Messstation 10 weist im Gehäuse 20 darüberhinaus eine Ausgabeeinheit 26 in Form eines Displays auf. Das Display ermöglicht eine geeignete Darstellung der Temperaturverteilung $T(x, y)$ auf der Objektoberfläche in kalibrierter Form z.B. mit einer Falschfarbendarstellung. Darüberhinaus ermöglicht eine Eingabeeinheit 25, wie eine Tastatur oder dergleichen, am Gehäuse 20 der Messstation 10 die Eingabe von Werten, wie z.B. eines oder mehrerer Testwerte soweit diese nicht system-inhärent gespeichert sind.

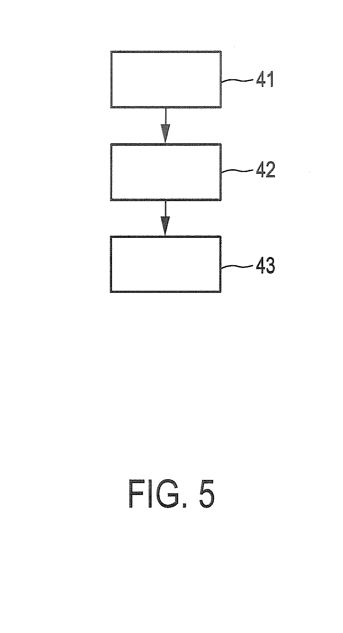

Zur Durchführung des Messverfahrens im Rahmen der vorliegenden Ausführungsform ist in Fig. 5 eine bevorzugte Abfolge von Verfahrensschritten dargestellt. In einem ersten Schritt 41 wird eine Messstation 10 objektfern vom Zielobjekt 100 angeordnet und eine bildgebende Aufnahme eines thermographischen Wärmebildes durchgeführt. Dem thermographischen Wärmebild kann eine Temperaturverteilung $T(x, y)$ auf der Objektoberfläche über den Abbildungsmassstab bildpunktweise zugeordnet werden. Des Weiteren wird eine objektferne Temperatur $T_{ref}$ und zur Bestimmung des Abbildungsmassstabs die Distanz zum Messobjekt gemessen.

In einem zweiten Schritt 42 wird wenigstens ein Wärmeübergangssensor 30 objektnah an einer Oberfläche des Zielobjekts 100 angeordnet und eine erste objektnahe Temperatur $T_A$ gemessen. Des Weiteren werden bei dieser Ausführungsform die vorgenannten Testwerte und eine zweite objektnahe Temperatur $T_I$ gemessen. Mittels der Testwerte und der Temperaturen $T_A$, $T_I$ wird insbesondere der Wärmeübergangskoeffizient h bestimmt. Außerdem wird die gemessene Temperaturverteilung $T(x, y)$ durch Gleichsetzung von $T_A$ und $T(x_0, y_0)$, d.h. der Temperatur an Orten $(x_0, y_0)$ des Wärmeübergangssensors 30, kalibriert.

In einem dritten Schritt 43 werden die Messwerte und Testwerte vom Wärmeübergangssensor 30 oder von einer Anzahl von Wärmeübergangssensoren 30 an die Messstation 10 übertragen, um diese einer Recheneinheit 24 zur Ermittlung einer gesamten Wärmeabgabe an einer Oberfläche des Zielobjekts 100 zur Verfügung zu stellen. Die Wärmeabgabe $Q_{out}$ kann von der Recheneinheit 24 z.B. nach der oben genannten Vorschrift der Formel 2 in der oben erläuterten Weise jedenfalls näherungsweise aber verlässlich unter Beseitigung von Konvektionsfehlern ermittelt werden.

Andere Rechenvorschriften sind ausdrücklich im Rahmen des Konzepts der Erfindung möglich - es ist zu verstehen, dass das vorliegende Ausführungsbeispiel lediglich zur beispielhaften Erläuterung des Konzepts der Erfindung zur Nutzung eines bildgebenden thermographischen Messsystems 1000 gemeint ist.

**Patentansprüche**

1.  Bildgebendes thermographisches Messsystem (1000) zur Messung einer Wärmeabgabe ($Q_{out}$) an einem Zielobjekt (100), wie an einer Gebäudewand, einer Bauwerksfassade oder dergleichen, aufweisend:

    - eine zur objektfernen Anordnung vorgesehene Messstation (10) mit
    - einer elektrischen bildgebenden Einrichtung (4) zur Aufnahme eines thermographischen Wärmebildes (200), dem eine Temperaturverteilung zuzuordnen ist, und mit
    - einem objektfernen Temperatursensor (6) zur Messung einer objektfernen Temperatur ($T_{ref}$);
    - wenigstens einen zur objektnahen Anordnung vorgesehenen Wärmeübergangssensor (30),
    - eine Übertragungsanordnung (23) zur Übertragung von Werten, zwischen dem wenigstens einen Wärmeübergangssensor (30) und der Messstation (10), wobei
    - der Wärmeübergangssensor (30) ausgebildet ist, Testwerte zur Ermittlung eines Wärmeübergangskoeffizienten (h) vorzugeben.

2.  Messsystem nach Anspruch 1, **dadurch gekennzeichnet, dass** der Wärmeübergangssensor (30) aufweist:

    wenigstens einen Temperatursensor (7) zur Messung einer ersten objektnahen Temperatur ($T_A$) und/oder eine Wärmeübergangsanordnung (15), mittels der Testwerte zur Ermittlung eines Wärmeübergangskoeffizienten (h) vorgebbar sind.

3.  Messsystem nach Anspruch 1 oder 2 **gekennzeichnet durch** eine Recheneinheit (24), die ausgebildet ist,

    - die Temperaturverteilung (T (x, y)) auf Werte der wenigstens einen ersten objektnahen Temperatur ($T_A$) zu kalibrieren,
    - wenigstens mittels der Testwerte einen Wärmeübergangskoeffizienten (h) zu bestimmen, und
    - eine Wärmeabgabe ($Q_{out}$) quantitativ anzugeben, insbesondere wenigstens unter Verwendung des Wärmeübergangskoeffizienten (h), der kalibrierten Temperaturverteilung (T (x, y)) und der objektfernen Temperatur ($T_{ref}$) sowie einem Abbildungsmaßstab (M) des thermoelektrischen Bildes.

4.  Messsystem nach einem der Ansprüche 1 bis 3, **dadurch gekennzeichnet, dass** die Recheneinheit (24) ausgebildet ist, den Wärmeübergangskoeffizienten (h) zu bestimmen wenigstens mittels der Testwerte, der objektfernen Temperatur ($T_{ref}$) und der ersten objektnahen Temperatur ($T_A$).

5.  Messsystem nach einem der Ansprüche 1 bis 4 **dadurch gekennzeichnet, dass** die Messstation (10) eine Messstrahlung nutzende Distanzmesseinrichtung (2) zur berührungslosen Messung einer Distanz (D) zwischen einem Referenzpunkt und wenigstens einem Messpunkt (P) am Zielobjekt (100), insbesondere mittels einer Laufzeitmessung.

6.  Messsystem nach Anspruch 4 und 5, **dadurch gekennzeichnet, dass** die Recheneinheit ausgebildet ist, aus der Distanz (D) und einem Fokuslängenwert (f) den Abbildungsmaßstab (M) zu ermitteln, insbesondere zusätzlich mittels einer Pixelfläche (Ap) des thermographischen Bildes.

7.  Messsystem nach einem der Ansprüche 1 bis 6, **dadurch gekennzeichnet, dass** der Wärmeübergangssensor (30) einen Testkörper (13) aufweist und ein Temperatursensor (7) zur Messung der ersten objektnahen Temperatur ($T_A$) wenigstens auf einer der Messstation (10) zuwendbaren Vorderseite oder Rückseite eines Testkörpers (13) angeordnet ist.

8.  Messsystem nach einem der Ansprüche 1 bis 7, **dadurch gekennzeichnet, dass** die Recheneinheit (24) ausgebildet ist, aus der objektfernen Temperatur ($T_{ref}$), der ersten objektnahen Temperatur ($T_A$) und den Testwerten (K, $\varepsilon$, L, $q_l$, $T_l$) den Wärmeübergangskoeffizienten (h), insbesondere auf der der Messstation (10) zuwendbaren Vorderseite eines Testkörpers, zu bestimmen und/oder vorzugeben.

9.  Messsystem nach einem der Ansprüche 1 bis 8, **dadurch gekennzeichnet, dass** der Wärmeübergangssensor (30) eine Wärmeübergangsanordnung (15) mit einem Testkörper (13) derart aufweist, dass Testwerte zur Ermittlung eines Wärmeübergangskoeffizienten (h) am Testkörper (13) vorgebbar und/oder bestimmbar sind, wobei der Testkörper (13) vorbekannte Testwerte einer Wärmeleitfähigkeit (K) und Dickenabmessung (L), insbesondere zusätzlich Wärmeemission ($\varepsilon$), aufweist.

10. Messsystem nach einem der Ansprüche 1 bis 9, **dadurch gekennzeichnet, dass** die Wärmeübergangsanordnung (15) des Wärmeübergangssensors (30) weiter eine Wärmequelle (11) mit vorbekannter Wärmeflussdichte ($q_I$) auf wenigstens einer dem Zielobjekt (100) zuwendbaren Rückseite und/oder Innenseite eines Testkörpers (13) aufweist.

11. Messsystem nach einem der Ansprüche 1 bis 10, **dadurch gekennzeichnet, dass** die Wärmeübergangsanordnung (15) des Wärmeübergangssensors (30) weiter wenigstens einen weiteren Temperatursensor (9), wenigstens auf einer dem Zielobjekt (100) zuwendbaren Rückseite und/oder Innenseite eines Testkörpers zur Messung einer zweiten objektnahen Temperatur ($T_I$) aufweist.

12. Messsystem nach einem der Ansprüche 1 bis 11, **dadurch gekennzeichnet, dass** eine Ausgabeeinheit (26) ausgebildet ist, die kalibrierte Temperaturverteilung darzustellen und/oder eine Eingabeeinheit (25) ausgebildet ist, Testwerte einzugeben.

13. Messsystem nach einem der Ansprüche 1 bis 12, **dadurch gekennzeichnet, dass** die Messstation (10) ein Gehäuse (20) aufweist, in dem die bildgebende Einrichtung (4), der objektferne Temperatursensor (6), ein Funkmodul (23.2) der Übertragungsanordnung (23) angeordnet ist, insbesondere zusätzlich die Recheneinheit (24), sowie ggfs. eine Ausgabeeinheit (26) und/oder Eingabeeinheit (25), angeordnet ist.

14. Messsystem nach einem der Ansprüche 1 bis 13, **dadurch gekennzeichnet, dass** die Wärmeübergangsanordnung (15) mittels der Testwerte zur Ermittlung eines Wärmeübergangskoeffizienten (h) vorgebbar und/oder bestimmbar sind eine Ultraschallmesseinheit aufweist.

15. Bildgebendes thermographisches Messverfahren zur Messung einer Wärmeabgabe ($Q_{out}$) an einem Zielobjekt (100), wie an einer Gebäudewand, einer Bauwerksfassade od. dgl., insbesondere mit einem bildgebenden Messsystem (100) nach einem der vorhergehenden Ansprüche, aufweisend die Schritte:

   - objektfernes Anordnen einer Messstation (10) und elektrisch bildgebende Aufnahme eines thermographischen Wärmebildes, dem eine Temperaturverteilung bildpunktweise zugeordnet wird und objektfernes Messen einer objektfernen Temperatur ($T_{ref}$);
   - objektnahes Anordnen wenigstens eines Wärmeübergangssensors (30) und
   - Messen einer ersten objektnahen Temperatur ($T_A$) und/oder Vorgeben von Testwerten in einer Wärmeübergangsanordnung (15) zum Ermitteln eines Wärmeübergangskoeffizienten (h) mittels der Testwerte;
   - Übertragen von Werten zwischen dem wenigstens einen Wärmeübergangssensor (30) und der Messstation (10).

16. Messverfahren nach Anspruch 15 weiter aufweisend die Schritte:

   - bildpunktweises Zuordnen des thermographischen Wärmebildes zu der Temperaturverteilung unter Kalibrieren derselben auf Werte der wenigstens einen ersten objektnahen Temperatur ($T_A$),
   - Bestimmen eines Wärmeübergangskoeffizienten (h) wenigstens mittels der Testwerte und
   - quantitatives Angeben einer Verteilung einer Wärmeabgabe ($Q_{out}$) unter Nutzung des Wärmeübergangskoeffizienten (h), der kalibrierten Temperaturverteilung und der objektfernen Temperatur ($T_{ref}$) sowie einem Abbildungsmaßstab (M) und der Pixelgrösse ($A_P$) des thermoelektrischen Bildes.

17. Messverfahren nach Anspruch 15 oder 16, **dadurch gekennzeichnet, dass** der Wärmeübergangssensor (30) von einer bildgebenden Aufnahme eines thermographischen Wärmebildes erfasst wird und einem Bildpunkt des Wärmebildes die erste objektnahe Temperatur ($T_A$) als Teil der Temperaturverteilung zugeordnet wird.

18. Messverfahren nach einem der Ansprüche 15 bis 17, **dadurch gekennzeichnet, dass** mittels der Testwerte sowie wenigstens der objektfernen Temperatur und der ersten objektnahen Temperatur der Wärmeübergangskoeffizient bestimmt wird, insbesondere zusätzlich mittels einer vorbekannten Wärmeflussdichte einer Wärmequelle ($q_I$) und/oder einer zweiten objektnahen Temperatur ($T_I$) auf wenigstens einer dem Zielobjekt (100) zuwendbaren Rückseite und/oder Innenseite eines Testkörpers (13).

19. Messverfahren nach einem der Ansprüche 15 bis 18, **dadurch gekennzeichnet, dass** eine Distanz (D) zwischen einem Referenzpunkt und wenigstens einem Messpunkt am Zielobjekt (100) berührungslos gemessen wird, insbesondere mittels einer Laufzeitmessung.

20. Messverfahren nach Anspruch 19, **dadurch gekennzeichnet, dass** aus der Distanz (D), einem Fokuslängenwert (f) und einer Pixelfläche (Ap) der Abbildungsmaßstab (M) ermittelt wird.

(A)

(B)

100

S

104

200    201

FIG. 1

(STAND DER TECHNIK)

FIG. 2

30

13

ε    K

11

$q_I$

L

7

9

$T_A$

$T_I$

z

15

FIG. 3

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **DITTIÉ.** Umwelteinflüsse auf die Genauigkeit von GebäudeThermographien. *Thermographie-Kolloquium,* 2007